# EUROPEAN PATENT APPLICATION

(11) **EP 4 383 688 A1**
(43) Date of publication of application: **12.06.2024**
(21) Application number: 22212674.0
(22) Date of filing: 09.12.2022
(51) Int. Cl.: H04L 67/63, H04W 40/20, H04L 45/12

(54) **COMPUTER-IMPLEMENTED METHOD FOR GENERATING AND BROADCASTING ROUTING INFORMATION WITHIN A WIRELESS INFORMATION CENTRIC NETWORK**

(71) Applicant: Airbus S.A.S., 31700 Blagnac (FR)
(72) Inventor: Milheiro Mendes, Paulo-Jorge, 82024 Taufkirchen (DE)
(74) Representative: OTN Airbus SAS

(57) **Abstract**

The invention provides a computer-implemented method for generating and broadcasting routing information within a wireless information centric network (10), the network (10) including a plurality of nodes (12), each node (12) having a network address (14) and a geographic location (16), wherein a plurality of data objects (18) is distributed over one or more destination nodes (20) in the network (10), each data object (18) being identifiable by a name prefix (22), wherein each node (12) in the network (10) is configured to exchange hello messages (24) with one or more neighbor nodes (26) that are reachable from the respective node (12) via a wireless connection link (28).

## Description

The invention relates to a computer-implemented method for generating and broadcasting routing information within a wireless information centric network. The invention further relates to a data processing device, a computer program, and a computer-readable data carrier.

The term Information-Centric Networking (ICN) appeared around 2010, likely inspired by Van Jacobson's 2006 Google Tech Talk "A New Way to look at Networking". The major motivation towards ICN is the architectural mismatch of today's Internet architecture and its usage. Namely, today we build, support, and use Internet applications and services on top of an extremely capable architecture not designed to support them. Specifically, today's IP packets can name only endpoints of conversations (IP addresses) at the network layer. The purpose of ICN is to generalize this layer allowing to name any information (or content), not just endpoints.

The ICN framework was created to support communication in a fixed network infrastructure. Current implementations of the ICN framework, such as Named-Data Networking (NDN) and Content Centric Networking (CCN) support a default forwarding mechanism based on multicast: each Interest packet is broadcasted over all possible interfaces, except for the interface over which the Interest packet arrived, and follow up Interest packets are forwarded over the interface via which a Data packet arrived as a response to the first Interest packet. The multicasting scheme is repeated in the presence of packet losses.

In order to operate communications over a flying ad hoc network, the ICN data plane should be complemented by a control plane in order to avoid flooding a network with scarce and intermittently available resources, as is the case of a wireless network. In airborne ad hoc networks, routing protocols play a crucial role to ensure reliable end-to-end data transmission with desirable performance metrics. However, due to the mobility of aircraft, instability of wireless channels, potential limited resources, and the variability of Quality of Service (QoS) requirements, routing in ad hoc wireless networks has become a vital task.

The development of routing protocols is normally based on a set of basic routing technologies (one or a combination thereof): reactive protocols, proactive protocols, hybrid routing, geographic routing.

When comparing proactive and reactive routing protocols, we can say that proactive routing protocols may have large overhead for maintaining routing tables up-to-date and they may react slowly to topology changes, resulting in larger delays. However, a disadvantage of reactive routing protocols may be the high latency in finding suitable routes. On the other hand, source routing may not scale well, since overhead may increase due to large header size.

Hybrid routing protocols combine the proactive and reactive protocols to overcome their limitations. However, in ad hoc wireless networks, the dynamic behavior of nodes and links may make it difficult to obtain and maintain information required by hybrid routing protocols, due to the static definition of zones. Hence, a dynamic management of zones is required.

Geographic-based routing protocols use position attributes of networking nodes, instead of topological information, which makes them good candidates to deal with frequent topology changes. The same advantages apply in general to opportunistic routing protocols since they are agnostic of topological information.

Geographic-based routing protocols may be also good candidates to route in networks of mobile nodes, depending upon the granularity of the used location coordinates, since highly precise geographic coordinates may also change considerably with node mobility. Hence the usage of geographic coordinates may be a good candidate to route traffic to a group of nodes present in a certain geographic area: a kind of multicast based on geographic locators, meaning that communication is not to specific nodes, but to nodes that are in specific geographic areas.

Most of the above-mentioned family of protocols do not provide support to some properties useful in an airborne scenario such as: multipath to increase robustness; multicast to support group communication, such as to support Distributed Data Services in an FCAS scenario; and QoS/traffic awareness to support different types of traffic.

Moreover, most of the mentioned protocols target terrestrial ad hoc networks, and not airborne networks, where the low number of physical obstacles may allow the pervasive usage of geographic location information. Such information may be used to mitigate the problems raised by a frequently changing topology, allowing routing to be focused more on the distance towards a destination and not so much on the topology that needs to be crossed to get there.

The object of the invention is to provide an improved wireless ad hoc routing protocol.

To achieve this object, the invention provides a computer-implemented method for generating and broadcasting routing information within a wireless information centric network according to claim 1. A data processing device, a computer program, and a computer-readable data carrier are subject-matter of the parallel claim.

Advantageous embodiments of the invention are subject-matter of the dependent claims.

In one aspect, the invention provides computer-implemented method for generating and broadcasting routing information within a wireless information centric network, the network including a plurality of nodes, each node having a network address and a geographic location, wherein a plurality of data objects is distributed over one or more destination nodes in the network, each data object being identifiable by a name prefix, wherein each node in the network is configured to exchange hello messages with one or more neighbor nodes that are reachable from the respective node via a wireless connection link, the method comprising:
a) storing, in each node, a neighbor information base, wherein the neighbor information base of a reference node contains:
   - the network address of each neighbor node that is reachable from the reference node via a wireless connection link as neighbor network address, and
   - for each neighbor network address, the geographic location of the corresponding neighbor node as corresponding neighbor location;
b) storing, in each node, a routing information base, wherein the routing information base of the reference node contains:
   - the name prefix of each data object stored in such one or more destination nodes that are reachable on one or more destination paths starting from a next hop node associated with the respective destination path as routing name prefix,
   - for each routing name prefix, the network address of each said next hop node as corresponding next hop network address, and
   - for each routing name prefix and each corresponding next hop network address, a path length of a corresponding destination path starting from the corresponding next hop node as corresponding routing path length;
c) updating, in each node, the neighbor information base and the routing information base based on a hello message received by the respective node, wherein the hello message sent by the reference node includes:
   - a network address indicator corresponding to the network address of the reference node,
   - a location indicator corresponding to the geographic location of the reference node,
   - one or more name prefix indicators, each name prefix indicator corresponding to the name prefix of the data object stored in such one or more destination nodes that are reachable on one or more destination paths starting from the reference node, and
   - for each name prefix indicator, at least one corresponding path length indicator corresponding to the path length of the corresponding destination path starting from the reference node;
d) generating, by each node, a hello message based on the neighbor information base and the routing information base of the respective node, and broadcasting the generated hello message.

Preferably, step c) further comprises:
c1) updating the neighbor information base of the respective node by identifying:
- the network address indicator as neighbor network address, and
- for the network address indicator as neighbor network address, the location indicator as corresponding neighbor location.

Preferably, step c) further comprises:
c2) updating the routing information base of the respective node by identifying:
- each name prefix indicator as routing name prefix,
- for each name prefix indicator as routing name prefix, the network address indicator as corresponding next hop network address, and
- for each name prefix indicator as routing name prefix and the network address indicator as corresponding next hop network address, the at least one corresponding path length indicator as corresponding routing path length.

Preferably, step d) further comprises:
d1) for each routing name prefix and each corresponding next hop network address contained in the routing information base of the respective node, calculating the path length of the corresponding destination path starting from the respective node by adding:
- the corresponding routing path length and
- a Euclidian neighbor link distance from the respective node to the neighbor node that has the neighbor network address identical with the respective corresponding next hop network address, wherein said Euclidian neighbor link distance is computed from the geographic location of the respective node and the neighbor location of said neighbor node.

Preferably, step d) further comprises:
d2) generating the hello message by using:
- the network address of the respective node as network address indicator,
- the geographic location of the respective node as location indicator,
- each routing name prefix in the routing information base of the respective node as name prefix indicator, and
- for each routing name prefix as name prefix indicator, the calculated path length of at least one of said corresponding destination paths starting from the respective node as path length indicator.

Preferably, step d) comprises:
d3) generating the hello message by selecting, for each routing name prefix as name prefix indicator, the corresponding destination path starting from the respective node that has the lowest calculated path length.

Preferably, the neighbor information base and/or the routing information base are further updated based on the dynamic link exchange protocol (DLEP).

Preferably,
e) the neighbor information base of the reference node further contains:
   - for each neighbor network address, a quality parameter indicative of a quality of the wireless connection link from the reference node to the corresponding neighbor node as corresponding neighbor link quality;
f) the routing information base of the reference node further contains:
   - for each routing name prefix and each corresponding next hop network address, an average quality parameter of said corresponding destination path starting from the corresponding next hop node as corresponding average routing quality; and
g) the hello message sent by the reference node further includes:
   - for each of said name prefix indicators, a corresponding average quality indicator corresponding to the average quality parameter of said corresponding destination path starting from the reference node.

Preferably, step c) further comprises:
c3) updating the routing information base of the respective node by identifying:
- for each name prefix indicator as routing name prefix and the network address indicator as corresponding next hop network address, the corresponding average quality indicator as corresponding average routing quality.

Preferably, a quality requirement parameter is associated with each name prefix, wherein:
h) the routing information base of the reference node further contains:
   - for each routing name prefix, the quality requirement parameter associated with the corresponding name prefix;
i) the hello message sent by the reference node includes:
   - for each of name prefix indicator, the quality requirement parameter associated with the corresponding name prefix.

Preferably, step d) further comprises:
d4) for each routing name prefix and each corresponding next hop network address contained in the routing information base of the respective node, calculating the average quality parameter of the corresponding destination path starting from the respective node by using:
- the corresponding average routing quality and
- the neighbor link quality of the wireless connection link from the respective node to the neighbor node that has the neighbor network address identical with the respective corresponding next hop network address.

Preferably, step d) further comprises:
d5) generating the hello message by selecting, for each name prefix indicator, the corresponding destination path starting from the respective node that has an average quality parameter that satisfies the quality requirement parameter associated with the corresponding name prefix, and by using said average quality parameter as corresponding average quality indicator.

Preferably, the method further comprises:
j) storing, in each node, a forwarding information base image, wherein the forwarding information base image of the respective node is based on the routing information base of the respective node and contains:
- the routing name prefixes as forwarding name prefixes and
- for each forwarding name prefix, the network address of one or more next hop nodes associated with such corresponding destination path starting from the reference node that has an average quality parameter that satisfies the quality requirement parameter associated with the corresponding name prefix.

In another aspect, the invention provides a data processing device comprising means for carrying out the method of any of the preceding embodiments.

In another aspect, the invention provides an aircraft comprising the data processing device, a sensor for detecting a geographic location and a network device for establishing a wireless connection link.

In another aspect, the invention provides a computer-readable data carrier having stored thereon the computer program.

Embodiments of the invention are now explained in more detail with reference to the accompanying drawings of which
- Fig. 1: shows an embodiment of a wireless information centric network;
- Fig. 2: shows a structure of an embodiment of a hello message;
- Fig. 3: shows a functional diagram of an embodiment of a computer-implemented method for generating and broadcasting routing information within the network;
- Fig. 4: shows a structure of an embodiment of a neighbor information base;
- Fig. 5: shows a structure of an embodiment of a routing information base;
- Fig. 6: shows an operating principle of a control data gathering function; and
- Fig. 7: shows an operating principle of a decision-making function.

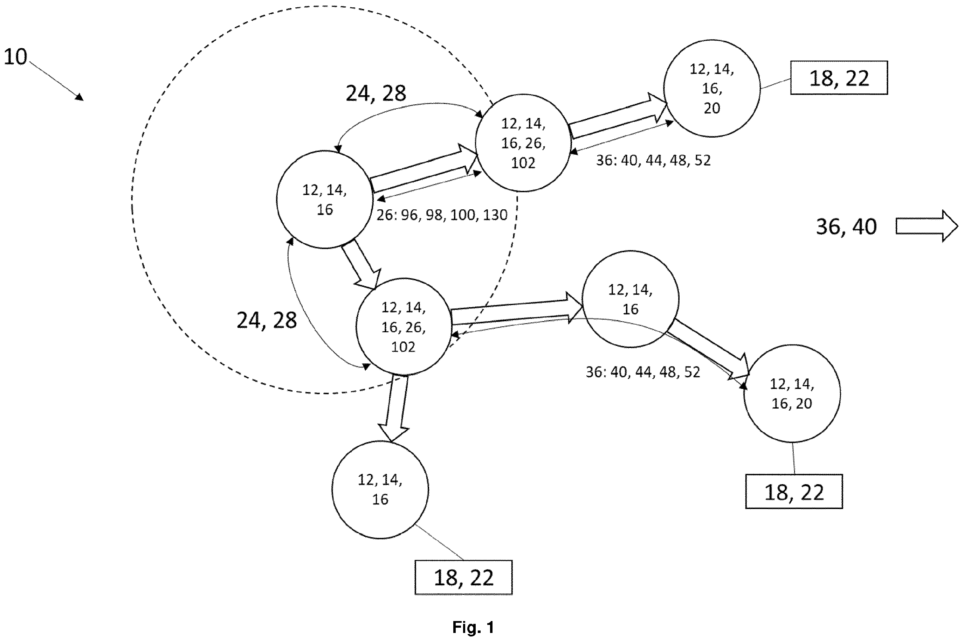

Fig. 1 shows an embodiment of a wireless information centric network 10.

The network 10 includes a plurality of nodes 12. Each node 12 has a network address 14 and a geographic location 16. A plurality of data objects 18 is distributed over a plurality of destination nodes 20 in the network 10. Each data object 18 can be identified by a name prefix 22.

Each node 12 in the network 10 is configured to exchange hello messages 24 with one or more neighbor nodes 26 that are reachable from the respective node 12 via a wireless connection link 28.

Therefore, each node 12 periodically broadcasts a hello message 24 to the one or more neighbor nodes 26. A time interval Tₕₑₗₗₒ between broadcasting the hello messages 24 can be defined globally, i.e., equal for all nodes 12 in the network 10, or locally, i.e., for each node 12 separately.

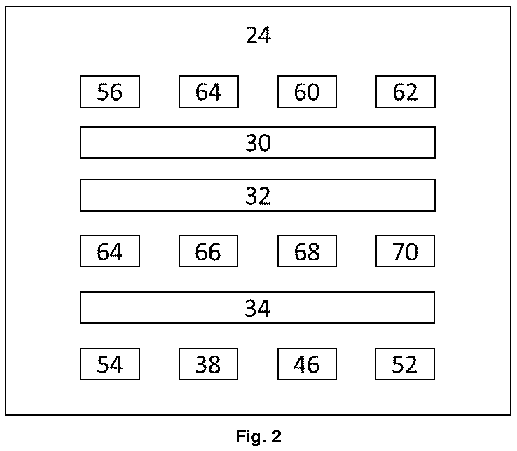

Fig. 2 shows a structure of an embodiment of one of the hello messages 24 sent by the node 12.

The hello message 24 includes a network address indicator 30 corresponding to the network address 14 of the node 12. The hello message 24 further includes a location indicator 32 corresponding to the geographic location 16 of the node 12.

The hello message 24 further includes a name prefix indicator 34 corresponding to the name prefix 22 of the data object 18 stored in such one or more destination nodes 20 that are reachable on one or more destination paths 36 starting from the node 12.

For the name prefix indicator 34, the hello message 24 includes a path length indicator 38 corresponding to a path length 40 of at least one corresponding destination path 36 starting from the node 12.

For the name prefix indicator 34, the hello message 24 includes an average quality indicator 42 corresponding to an average quality parameter 44 of the at least one corresponding destination path 40 starting from the node 12. The average quality parameter 44 is indicative of an average quality over all wireless connection links 28 along the at least one corresponding destination path 36.

The average quality indicator 42 is in the present case a 2-tuple consisting of an average throughput indicator 46 corresponding to an average throughput parameter 48 and an average delay indicator 50 corresponding to an average delay parameter 52. The average throughput parameter 48 is indicative of an average throughput over all wireless connection links 28 along the at least one corresponding destination path 36, while the average delay parameter 52 is indicative of an average delay over all wireless connection links 28 along the at least one corresponding destination path 36.

For the name prefix indicator 38, the hello message 24 further includes a quality requirement parameter 54 which is associated with the corresponding name prefix 22.

The hello message 24 may additionally include a version indicator 56 corresponding to a version of a computer program, a hop limit indicator 60 corresponding to a hop limit, a hello interval indicator 62 corresponding to the time interval Tₕₑₗₗₒ, next header indicator 64, a header length indicator 66, an options indicator 68, and a destination number indicator 70.

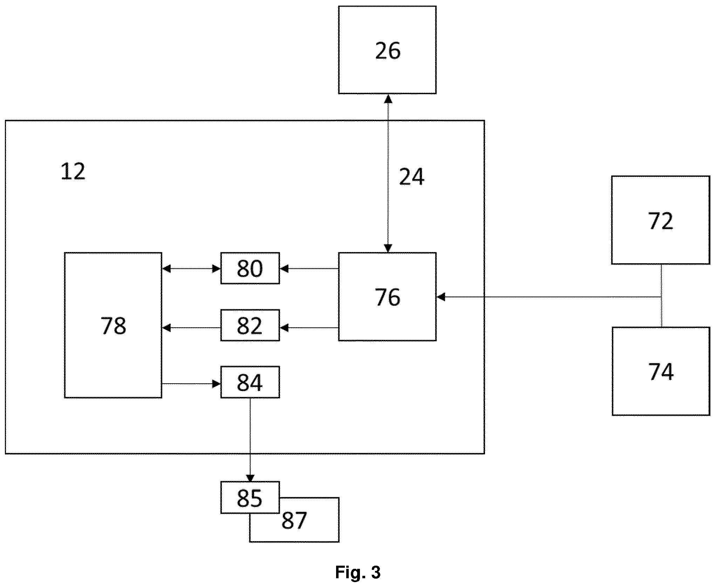

Fig. 3 shows a functional diagram of an embodiment of a computer-implemented method for generating and broadcasting routing information within the network 10, wherein the figure shows the method being implemented in one of the nodes 12 of the network 10.

The node 12 is connected to a network device 72 for establishing the wireless connection link 28 with the neighbor node 26. Furthermore, the node 12 is connected to a sensor 74 for detecting the geographic location 16 of the node 12.

The method includes a control data gathering function 76 and a decision-making function 78.

The control data gathering function 76 and the decision-making function 78 have access to a neighbor information base (NIB) 80 and a routing information base (RIB) 82 which are both stored in the node 12. The decision-making function 76 has additionally access to a forwarding information base (FIB) image 84. The forwarding information base image 84 is flashed to a FIB structure 85 maintained by an AIRNET data plane 87 after every update.

The control data gathering function 76 is connected to the network device 72 for establishing the wireless connection link 28 and to the sensor 74 for detecting the geographic location 16 of the node 12.

The network device 72 establishes the wireless connection link 28 with the neighbor node 26. The network device 72 can determine the network address 14 of the neighbor node 26. The network device 72 can further determine a quality parameter 86 indicative of a quality of the wireless connection link 28 from the node 12 to the neighbor node 26. For this, the network device 26 can use a network protocol, for example, the dynamic link exchange protocol (DLEP). In the present case, the quality parameter 86 is a 2-tuple consisting of a throughput parameter 88 and a delay parameter 90 indicative of, respectively, a throughput or a delay of the wireless connection link 28 from the node 12 to the neighbor node 26.

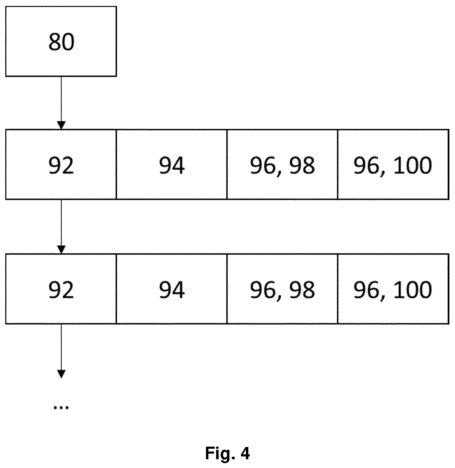

Fig. 4 shows a structure of an embodiment of the neighbor information base 80.

The neighbor information base 80 of a reference node, generally contains the network address 14 of each neighbor node 26 that is reachable from the reference node via a wireless connection link 28 as neighbor network address 92. For each neighbor network address 92, the neighbor information base 80 contains the geographic location 16 of the corresponding neighbor node 26 as corresponding neighbor location 96 and the quality parameter 86 of the wireless connection link 28 from the node 12 to the corresponding neighbor node 26 as corresponding neighbor link quality 96. In the present case, the neighbor information base 80 contains the throughput parameter 88 of the wireless connection link 28 from the node 12 to the corresponding neighbor node 26 as corresponding neighbor link throughput 98 and the delay parameter 90 of the wireless connection link 28 from the node 12 to the corresponding neighbor node 26 as corresponding neighbor link delay 100.

When the network device 72 of the node 12 establishes the wireless connection link 28 with the neighbor node 26, the control data gathering function 76 gathers the network address 14 of the neighbor node 26 and the quality parameter 86, i.e., the throughput 88 and the delay parameter 90, of the wireless connection link 28 from the node 12 to the neighbor node 26 from the network device 72 and stores them, respectively as neighbor network address 92 and corresponding neighbor link quality 96, i.e., as corresponding neighbor link throughput 98 and as corresponding neighbor link delay 100, in the neighbor information base 80.

When the network device 72 receives a hello message 24 from the neighbor node 26, the control data gathering function 76 gathers the network address indicator 30 and the location indicator 32. The control data gathering function 76 further identifies the network address indicator 30 as neighbor network address 92 and stores the location indicator 32, i.e., the geographic location 16 of the neighbor node 26, as corresponding neighbor location 94 in the neighbor information base 80.

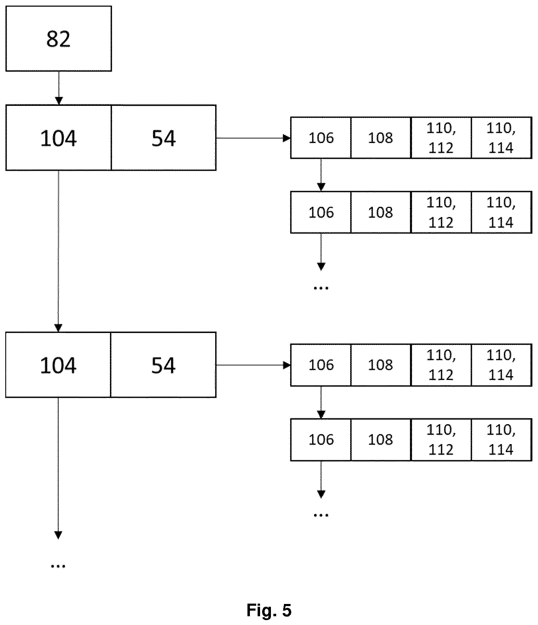

Fig. 5 shows a structure of an embodiment of the routing information base 82.

The routing information base 82 of the reference node generally contains the name prefix 22 of each data object 18 stored in such one or more destination nodes 20 that are reachable on one or more destination paths 36 starting from a next hop node 102 associated with the respective destination path 36 as routing name prefix 104.

For each routing name prefix 104, the routing information base 82 further contains the network address 14 of each said next hop node 102 as corresponding next hop network address 106. For each routing name prefix 104 and each corresponding next hop network address 106, the routing information base 82 further contains the path length 40 of a corresponding destination path 36 starting from the corresponding next hop node 102 as corresponding routing path length 108.

For each routing name prefix 104 and each corresponding next hop network address 102, the routing information base 82 further contains the average quality parameter 44 of the corresponding destination path 36 starting from the corresponding next hop node 102 as corresponding average routing quality 110. In the present case, for each routing name prefix 104 and each corresponding next hop network address 102, the routing information base 82 contains the average throughput parameter 48 and the average delay parameter 52 of the corresponding destination path 36 starting from the corresponding next hop node 102 as corresponding average routing throughput 112 and corresponding average routing delay 114, respectively. For each routing name prefix 104, the routing information base 82 further contains the quality requirement parameter 54 associated with the corresponding name prefix 22.

When the network device 72 receives a hello message 24 from the neighbor node 26, the control data gathering function 76 gathers each name prefix indicator 34, each path length indicator 38, each average quality indicator 42, in this case each average throughput indicator 46 and each average delay indicator 50, and each quality requirement parameter 54.

The control data gathering function 76 identifies the name prefix indicator 34 as routing name prefix 104 and stores it in the routing information base 82. For each name prefix indicator 34 as routing name prefix 104, the control data gathering function 76 identifies the network address indicator 30 as corresponding next hop network address 102 and stores it in the routing information base 82. For each name prefix indicator 34 as routing name prefix 104 and the network address indicator 30 as corresponding next hop network address 102, the control data gathering function 76 identifies the corresponding path length indicator 38 as corresponding routing path length 108 and stores it in the routing information base 82. For each name prefix indicator 34 as routing name prefix 104 and the network address indicator 30 as corresponding next hop network address 102, the control data gathering function 76 identifies the corresponding average quality indicator 42 as corresponding average routing quality 110, in the present case, the corresponding average throughput indicator 46 as corresponding average routing throughput 112 and the corresponding average delay indicator 50 as corresponding average routing delay 114 and stores it in the routing information base 88.

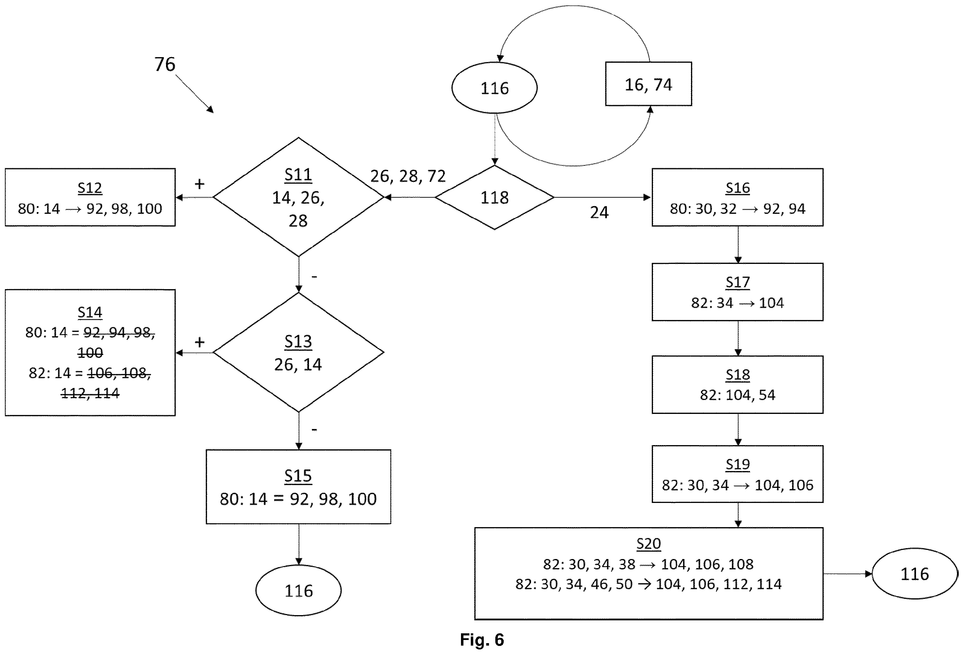

Fig. 6 shows an operating principle of the control data gathering function 76.

The operating principle starts at an idle state 116. In the idle state 116, the control data gathering function 76 gathers continuously, periodically, or at certain times the geographic location 16 of the node 12 from the sensor 74.

The control data gathering function 76 performs actions whenever a control data gathering event 118 occurs.

As a first possible control data gathering event 118, the network device 72 may determine a change of the wireless connection links 28 with the neighbor nodes 26.

In a step S11, the control data gathering function 76 determines from the gathered data the presence of an unknown wireless link connection 28 with an unknown neighbor node 26 whose network address 14 is not contained as neighbor network address 92 in the neighbor information base 80.

If the control data gathering function 76 determines an unknown wireless link connection 28, the control data gathering function 76 adds in step S12 a new entry with the network address 14 of the unknown neighbor node 26 as neighbor network address 92 in the neighbor information base 80. Likewise, the control data gathering function 76 adds to the new entry the corresponding neighbor link quality 96, i.e., the corresponding neighbor link throughput 98 and the corresponding neighbor link delay 100.

In a step S13, the control data gathering function 76 determines from the gathered data the presence or absence of known wireless link connections 28 with neighbor nodes 26 whose network address 14 is contained as neighbor network address 92 in the neighbor information base 80.

If the control data gathering function 76 determines the absence of a known wireless link connection 28, the control data gathering function 76 removes in a step S14 the entry with the corresponding neighbor network address 92 from the neighbor information base 80. Likewise, the control data gathering function 76 identifies the corresponding neighbor network address 92 as next hop network address 106 and removes all entries containing such network address 14 in the routing information base 82.

If in a step S15, the control data gathering function 76 determines the presence of a known wireless link connection 28, the control data gathering function 76 updates the corresponding neighbor link quality 96, i.e., the corresponding neighbor link throughput 98 and the corresponding neighbor link delay 100 in the neighbor information base 80. Afterwards, the control data gathering function 76 returns to the idle state 116.

As a second possible control data gathering event 118, the network device 72 may receive a hello message 24 from the neighbor node 26.

In a step S16, the control data gathering function 76 updates the neighbor information base 80. Therefore, the control data gathering function 76 gathers the network address indicator 30 and the location indicator 32 from the hello message 24. The control data gathering function 76 further identifies the network address indicator 30 as neighbor network address 92 and updates the corresponding neighbor location 94, i.e., the geographic location 16 of the neighbor node 26, in the neighbor information base 80 with the location indicator 32.

In a step S17, the control data gathering function 76 gathers each name prefix indicator 34 and identifies each name prefix indicator 34 as routing name prefix 104. If there is no entry in the routing information base 82 containing the name prefix indicator 34 as routing name prefix 104, the control data gathering function 76 adds a new entry containing the name prefix indicator 34 as routing name prefix 104.

In a step S18, the control data gathering function 76 gathers the corresponding quality requirement parameter 54 and adds the corresponding quality requirement parameter 54 to the new entry with said routing name prefix 104.

In a step S19, the control data gathering function 76 gathers the network address indicator 30 and identifies, for each name prefix indicator 34 as routing name prefix 104, the network address indicator 30 as corresponding next hop network address 106. If there is no entry in the routing information base 82 for the name prefix indicator 34 as routing name prefix 104 containing the network address indicator 30 as next hop network address 106, the control data gathering function 76 adds, for said name prefix indicator 34 as routing name prefix 104, a new entry containing the network address indicator 30 as corresponding next hop network address 106.

In a step S20, the control data gathering function 76 gathers, for each name prefix indicator 34, the corresponding path length indicator 38 and identifies, for each name prefix indicator 34 as routing name prefix 104 and the network address indicator 30 as corresponding next hop network address 106 in the routing information base 82, the corresponding path length indicator 38 as corresponding routing path length 108 and updates the corresponding entry with said corresponding routing path length 108.

Further in step S20, the control data gathering function 76 gathers, for each name prefix indicator 34, the corresponding average quality indicator 42, i.e., the corresponding average throughput indicator 46 and the corresponding average delay indicator 50, and identifies, for each name prefix indicator 34 as routing name prefix 104 and the network address indicator 30 as next hop network address 106 in the routing information base 82, the corresponding average quality indicator 42, i.e., the corresponding average throughput indicator 46 and the corresponding average delay indicator 50, as corresponding average routing quality 110, i.e., as corresponding average routing throughput 112 and as corresponding average routing delay 114. Afterwards, the control data gathering function 76 returns to the idle state 116.

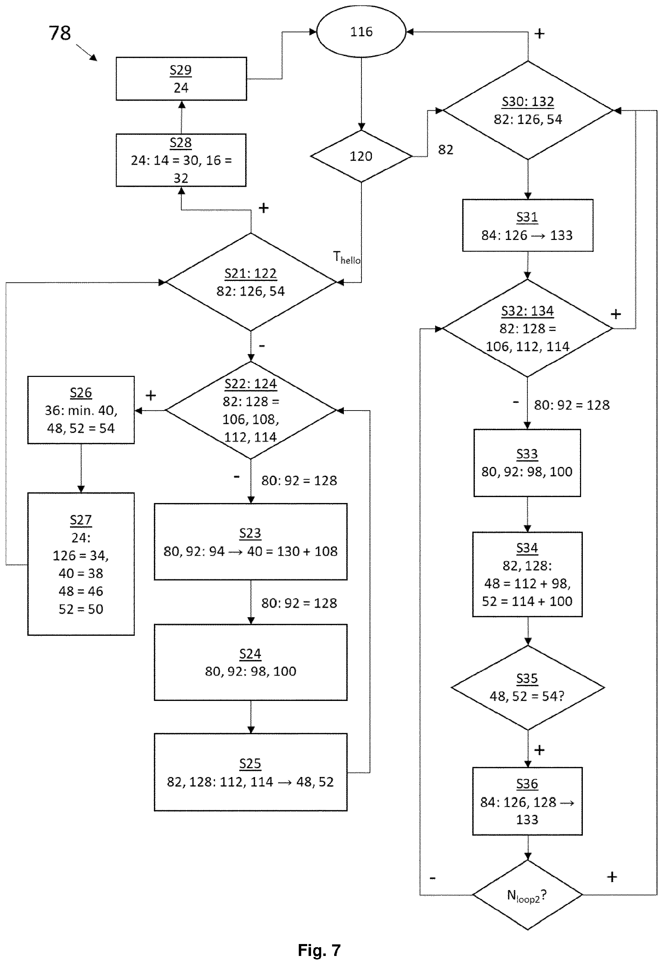

Fig. 7 shows an operating principle of the decision-making function 78.

The operating principle starts at the idle state 116. The decision-making function 78 performs actions whenever a decision-making event 120 occurs.

As a first possible decision-making event 120, the decision-making function 78 may determine an expiry of the time interval Tₕₑₗₗₒ in the node 12. This means, the node 12 is to generate and broadcast a hello message 24.

The generating of the hello message 24 is based on the neighbor information base 80 and the routing information 82.

For generating of the hello message 24, the decision-making function 78 accesses the routing information base 82 and enters in a step S21 a first generation loop 122.

In the first generation loop 122, the decision-making function 78 selects a current routing name prefix 126 including the corresponding quality requirement parameter 54 contained in the routing information base 82.

For the current routing name prefix 126, the decision-making function 78 enters in a step S22 a second generation loop 124 and selects a current corresponding next hop network address 128 including the corresponding routing path length 108, the corresponding average routing quality 110, i.e., the corresponding average routing throughput 112 and the corresponding average routing delay 114.

The decision-making function 78 then scans the neighbor information base 80 for the neighbor network address 92 that is identical with the current corresponding next hop network address 128.

When the decision-making function 78 finds said neighbor network address 92 in the neighbor information base 80, the decision-making function 78 retrieves in a step S23 the corresponding neighbor location 94 from the neighbor information base 80 and calculates the path length 40 of the corresponding destination path 36 starting from node 12 via the corresponding neighbor node 26.

The decision-making function 78, therefore, computes an Euclidian neighbor link distance 130 from the node 12 to the corresponding neighbor node 26 by using the retrieved corresponding neighbor location 94 and the geographic location 16 of the node 12. The decision-making function 78 then adds the corresponding routing path length 108 and the computed Euclidian neighbor link distance 130.

When the decision-making function 78 finds said neighbor network address 92 in the neighbor information base 80, the decision-making function 78 further retrieves in a step S24 the corresponding neighbor link quality 96, i.e., the corresponding neighbor link throughput 98 and the corresponding neighbor link delay 100.

In a step S25, the decision-making function 78 calculates the average quality parameter 44, i.e., the average throughput parameter 48 and the average delay parameter 52, of the corresponding destination path 36 starting from the node 12 via the corresponding neighbor node 26. In this step, the decision-making function 78 uses the corresponding average routing quality 110, i.e., the corresponding average routing throughput 112 and the corresponding average routing delay 114, and retrieved corresponding neighbor link quality 96, i.e., the retrieved corresponding neighbor link throughput 98 and the retrieved corresponding neighbor link delay 100.

The decision-making function 78 performs the actions of steps S22, S23, S24, and S25 for each corresponding next hop network address 106 of the current routing name prefix 126 until the second generation loop 124 ends.

When the second generation loop 124 has ended, the decision-making function 78 selects in a step S26 for the current routing name prefix 114 the corresponding destination path 36 starting from the node 12 that has the lowest calculated path length 40 and that has an average quality parameter 44, i.e., an average throughput parameter 48 and an average delay parameter 52, that satisfies the corresponding quality requirement parameter 54.

The decision-making function 78 then appends in a step S27 the current name routing name prefix 126 as name prefix indicator 34, the calculated path length 40 of the selected corresponding destination path 36 as path length indicator 38, the average quality parameter 44, i.e., the average throughput parameter 48 and the average delay parameter 52, of the selected corresponding destination path 36 as average quality indicator 42, i.e., as average throughput indicator 46 and as average delay indicator 50, in the hello message 24.

The decision-making function 78 then returns in the first generation loop 122 and selects a new current routing name prefix 126 contained in the routing information base 82.

When the first generation loop 122 has ended, the decision-making function 78 adds, in a step S28, the network address 14 of the node 12 as network address indicator 30 and the geographic location 16 of the node 12 as location indicator 32 to the hello message 24, broadcasts in a step S29 the hello message 24, and returns to the idle state 116.

As a second possible decision-making event 120, the decision-making function 78 may determine that the control data gathering function 76 has updated the routing information base 82. This means, the node 12 is to update the forwarding information base 84.

For updating the forwarding information base image 84, the decision-making function 78 accesses the routing information base 82 and enters in a step S30 a first base updating loop 132.

In the first base updating loop 132, the decision-making function 78 selects a current routing name prefix 126 including the corresponding quality requirement parameter 54 contained in the routing information base 82.

In a step S31, the decision-making function 78 determines whether the current routing name prefix 126 is contained in the forwarding information base image 84. If the current routing name prefix 126 is not contained in the forwarding information base image 82, the decision-making function 78 adds an entry containing the current routing name prefix 126 as forwarding name prefix 133 in the forwarding information base image 84.

For the current routing name prefix 126, the decision-making function 78 enters in a step S32 a second base updating loop 134 and selects a current corresponding next hop network address 128 including the corresponding average routing quality 110, i.e., the corresponding average routing throughput 112 and the corresponding average routing delay 114.

The decision-making function 78 then scans the neighbor information base 80 for the neighbor network address 92 that is identical with the current corresponding next hop network address 128.

When the decision-making function 78 finds said neighbor network address 92 in the neighbor information base 80, the decision-making function 78 further retrieves in a step S33 the corresponding neighbor link quality 96, i.e., the corresponding neighbor link throughput 98 and the corresponding neighbor link delay 100.

In a step S34, the decision-making function 78 calculates the average quality parameter 44, i.e., the average throughput parameter 48 and the average delay parameter 52, of the corresponding destination path 36 starting from the node 12 via the said neighbor node 26. In this step, the decision-making function 78 adds the corresponding average routing quality 110, i.e., the corresponding average routing throughput 112 and the corresponding average routing delay 114, and the retrieved corresponding neighbor link quality 96, i.e., the retrieved corresponding neighbor link throughput 98 and the retrieved corresponding neighbor link delay 100, respectively.

In a step S35, the decision-making function 78 determines whether the calculated average quality parameter 44, i.e., the average throughput parameter 48 and the average delay parameter 52, satisfies the corresponding quality requirement parameter 54.

If the calculated average quality parameter 44, i.e., the average throughput parameter 48 and the average delay parameter 52, satisfies the corresponding quality requirement parameter 54, the decision-making function 78 adds in a step S36 the current corresponding next hop network address 128 to the entry containing the forwarding name prefix 133 in the forwarding information base 84.

The decision-making function 78 performs the actions of steps S32, S33, S34, S35, and S36 for Nₗₒₒₚ₂ current corresponding next hop network addresses 128 of the current routing name prefix 126 or until the second base updating loop 134 ends.

The number Nₗₒₒₚ₂ of next hop network addresses can be defined globally, i.e., equal for all nodes 12 in the network 10, or locally, i.e., for each node 12 separately. The number Nₗₒₒₚ₂ sets a multipath dimension of the method.

When the second base updating loop 134 has ended or the number Nₗₒₒₚ₂ has been reached in the forwarding information base 84, the decision-making function 78 returns in the first base updating loop 132 and selects a new current routing name prefix 126 contained in the routing information base 82.

When the first base updating loop 132 has ended, the decision-making function 78 returns to the idle state 116.

The invention further provides a data processing device (not shown) comprising means for carrying out the computer-implemented method for generating and broadcasting routing information within the wireless information centric network 10. The invention further provides an aircraft (not shown) comprising the data processing device, the sensor 74 for detecting the geographic location 16 of the node 12, and the network device 72 for establishing the wireless connection link 28. The invention further provides a computer program (not shown) comprising instructions which, when the program is executed by a computer, cause the computer to carry out the computer-implemented method. The invention further provides a computer-readable data carrier (not shown) having stored thereon the computer program.

Preferred embodiments of the invention can be summarized as follows:
Preferred embodiments of this invention describe a control plane for airborne networks based on a new wireless ad hoc routing protocol.

Preferred embodiments of this invention propose a wireless routing protocol based on geographic locators and the notion of distance. The proposed solution preferably can support different types of traffic to be forwarded via multiple paths towards a specific destination address or a group of destination addresses. The proposed wireless routing protocol may be called Information Centric Airborne Routing (ICAIR) protocol. The proposed ICAIR protocol preferably allows data consumers to find a suitable set of path towards data producers based on following major properties:
- Distance-based: with ICAIR the data plane preferably forwards Interest packets to neighbors that are at a lower Euclidean distance from a device storing data objects with the desirable name prefix. Such devices can be the data producer itself or any other ICAIR device that caches the desirable named data. The selected set of neighbors may be different from the neighbors that are geographical closer to the destination. A metric based on distance is useful to avoid obstacles and the local maximum problem common in geographic routing protocols.
- Multipath: ICAIR can preferably select more than one neighbor as the next hop to reach a node caching the data corresponding to the announced name prefix.
- Traffic-aware: ICAIR may preferably restrict the number of potential next hops to the ones that announce a path with enough quality (e.g. average throughput and latency) to fulfil the properties of the name prefix, described by a Differentiated Services Code Point (DSCP) assigned by the data producer.
- Unicast/Multicast: Data packets may preferably be forwarded to a single node (unicast) or may be a set of nodes (multicast). Multicast is achieved when the name prefix matches more than one PIT entry.

In order to compute distances towards destinations, meaning devices hosting data described by the announced name prefixes, ICAIR routers preferably exchange periodical Hello messages with information about their geographic position as well as a tuple that defines the reachability toward a destination. Such tuples may include information about the name prefix, and the distance of towards the destination.

In order to be able to characterize the quality of an identified path, ICAIR routers preferably gather information about the properties of neighbors and the links connecting them based on the Dynamic Link Exchange Protocol (DLEP), which provides a bidirectional, event-driven communication channel between the router and the modem to facilitate communication of changing link characteristics.

To achieve its operational goal, the ICAIR routing protocol preferably is divided into several interfaces, networking functions and information structures, as illustrated in Fig. 3.

### 1. Data structures

The ICAIR protocol preferably relies on information collected from neighbor nodes and from the local wireless modem or modems. This information allows the router to keep control of the active neighbors (NIB), to identify suitable next hops towards each destination (RIB) and to select the best neighbors to forward packets (FIB). The FIB is flashed to the structure maintained by the data plane after every update.

The NIB is preferably indexed by Neighbor ID (an IP Address), and has a structure as shown in Fig. 4. Entries in the NIB are preferably created and eliminated by the Control Data Gathering networking function based on information received from DLEP when new neighbors appear and disappear. New entries may be created with the IP address of the neighbor as the Neighbor ID, and information about the quality of the link towards that neighbor, for example, the average throughput and the average delay. The information about the GPS coordinates of neighbors is preferably entered in the NIB by the Control Data Gathering networking function as a consequence of the reception of Hello messages from those neighbors. The information about the geographic position of the current node may be retrieved by the Control Data Gathering function from a local GPS receiver.

The RIB preferably is indexed by the name prefixes announced by producers, as illustrated in Fig. 5. For each announced name prefix, the RIB may store the DSCP corresponding to the quality level of the data (service) being announced by a producer.

**Table 1**

| DSCP Codes | Low Delay | High Throughput | Medium Throughput | Low Throughput |
|---|---|---|---|---|
| EF (101 110) | ✔ | | | |
| AF11 (001 010) | | ✔ | | |
| AF12 (001 100) | | | ✔ | |
| AF13 (001 110) | | | | ✔ |
| AF21 (010 010) | | ✔ | | |
| AF22 (010 100) | | | ✔ | |
| AF23 (010 110) | | | | ✔ |
| AF31 (011 010) | | ✔ | | |
| AF32 (011 100) | | | ✔ | |
| AF33 (011 110) | | | | ✔ |
| AF41 (100010) | | ✔ | | |
| AF42 (100 100) | | | ✔ | |
| AF43 (100 110) | | | | ✔ |

The DSCP value to be added to the RIB, and transported in Hello messages, preferably corresponds to the values of the average throughput and average delay required by the traffic generated by the producers, as shown in Table 1. This means, for instance that for EF traffic the decision-making network function should preferably select from the RIB the paths towards the destination that offer the lowest possible delay, while for instance for traffic that may be subjected to a high packet drop the decision-making network function can preferably select next hops with paths that offer low throughput.

Each entry preferably has a list of potential next hops. For each next hop, the RIB preferably holds information about the distance towards the destination, meaning the nearest node caching the data corresponding to the announced name prefix, as well as about the quality of the path to reach such nearest node, in terms of average throughput and delay. The list of potential next hops for each name prefix preferably is ordered by increasing order of the field Distance.

All entries in the RIB preferably are created and eliminated by the Control Data Gathering networking function: created upon the reception of a Hello message from a neighbor node; eliminated upon a notification via DLEP that the neighbor node is no longer active. The Hello message preferably carries information about the IP address of the neighbor as well as its Euclidean distance towards the destination and the average throughput and delay over that path.

### 2. Control data gathering

As illustrated in Fig. 3 the ICAIR protocol preferably makes decisions based on a set of information collected from neighbor nodes, by means of a set of defined Hello messages, as well as from the local modem, by using the DLEP protocol, and from a local GPS receiver. Collecting this information is the major role of the Control Data Gathering networking function, as shown in Fig. 6.

Via the DLEP protocol, the Control Data Gathering network function preferably is aware about changes in the list of neighbors. When notified about the association of a new neighbor via the wireless interface, the Control Data Gathering network function preferably adds a new NIB entry. This entry will be updated based on information gathered from DLEP in what concerns the properties of the link, for example, the average transmitted throughput and delay. The Control Data Gathering network function preferably eliminates one NIB entry when notified by DLEP that the associated neighbor is no longer reachable via the wireless interface.

The GPS coordinates of neighbor nodes preferably are included in the NIB based on information collected in periodic Hello messages. The time interval over which Hello messages are exchanged is a configuration item. The format of the Hello messages is illustrated in Fig. 2.

The Hello messages preferably allows each node to probe the properties of potential paths towards each destination/name prefix via different neighbor nodes. As shown in Fig. 6 the Control Data Gathering networking function can collect from the received Hello messages information about the reachability offered by the neighbor node. This information preferably is collected from the extended header of the Hello packet, and preferably includes: i) the name prefix announced by each destination reached via that neighbor: ii) the DSCP code characterizing the quality level required by that name prefix: iii) the distance towards the nearest node caching the announced data: iv) the average throughput and delay of the path towards that destination. This information preferably is stored in the RIB as illustrated in Fig. 5.

### 3. Decision making

The decision-making network function preferably aims to support the forwarding of packets via a set of neighbors that are at a lower distance from the destination node(s), and that are the initial nodes of paths that offer a good throughput and delay. The quality of a path may be estimated based on information received from neighbors (average throughput and delay as shown in Fig. 2) and from information collected locally from DLEP about the properties of the link towards the neighbor node.

The decision-making network function preferably is also responsible for informing neighbor nodes, via Hello messages, about the properties of paths useful to reach active destinations, meaning the nearest nodes that store the data corresponding to the announced name prefixes. This means that the decision-making network function may have two roles, as illustrated in Fig. 7:
- populate the FIB based on information stored in the RIB; and
- send Hello messages to neighbor nodes.

Fig. 7 illustrates the behavior based on the default routing strategy, as explained below.

The major role of the decision-making network function preferably is to populate the FIB, based on the information stored in the RIB, with N paths (identified by the IP address of the next hop) to reach each destination/name prefix. Each of the selected N neighbors/path needs to respect the quality level described by the DSCP code associated with the name prefix.

The maximum number of next hops associated with each data type to send to a destination node, may be limited by a variable N, which is a configuration parameter that sets the multipath dimension of the routing protocol. A high value of N results in a larger number of packets being replicated, following different paths, which means higher robustness, but also higher network cost, since those extra packets will consume network and computational resources in other nodes.

A second role of the decision-making network function preferably is to decide which paths will be disseminated to neighbor nodes in periodic Hello messages. The default routing strategy preferably is to disseminate the path with the lowest distance towards the destination and with enough quality to fulfil the DSCP code associated with the name prefix. Hence, for each destination node in the RIB, the decision-making network function preferably computes first the distance from the current node to the destination and then the associated average throughput and delay, considering the information collected in the Hello messages from the neighbor and the local information collected from the NIB. Afterwards, the node preferably disseminates the properties (new overall average throughput and average delay) of the path with lowest distance in a Hello message. The distance from the current node to a destination preferably is computed based on the Euclidean distance between the current node and its neighbor (computed based on the GPS coordinates of the current node and the GPS coordinates of the neighbor node as stored in the NIB) plus the distance from that neighbor to the destination, as indicated in the RIB.

The default routing strategy preferably is to disseminate only one path: the one with lowest distance towards the destination while fulfilling the desirable DSCP. However, an alternative routing strategy can pass by sending a set of N paths with lower distance that fulfil the desirable DSCP.

### List of reference signs:

- 10: network
- 12: node
- 14: network address
- 16: geographic location
- 18: data object
- 20: destination node
- 22: name prefix
- 24: hello message
- 26: neighbor node
- 28: wireless connection link
- 30: network address indicator
- 32: location indicator
- 34: name prefix indicator
- 36: destination path
- 38: path length indicator
- 40: path length
- 42: average quality indicator
- 44: average quality parameter
- 46: average throughput indicator
- 48: average throughput parameter
- 50: average delay indicator
- 52: average delay parameter
- 54: quality requirement parameter
- 56: version indicator
- 60: hop limit indicator
- 62: hello interval indicator
- 64: next header indicator
- 66: header length indicator
- 68: options indicator
- 70: destination number indicator
- 72: network device
- 74: sensor
- 76: control data gathering function
- 78: decision-making function
- 80: neighbor information base (NIB)
- 82: routing information base (RIB)
- 84: forwarding information base (FIB) image
- 85: FIB structure
- 86: quality parameter
- 87: AIRNET data plane
- 88: throughput parameter
- 90: delay parameter
- 92: neighbor network address
- 94: neighbor location
- 96: neighbor link quality
- 98: neighbor link throughput
- 100: neighbor link delay
- 102: next hop node
- 104: routing name prefix
- 106: next hop network address
- 108: routing path length
- 110: average routing quality
- 112: average routing throughput
- 114: average routing delay
- 116: idle state
- 118: control data gathering event
- 120: decision-making event
- 122: first generation loop
- 124: second generation loop
- 126: current routing name prefix
- 128: current next hop network address
- 130: Euclidian neighbor link distance
- 132: first base updating loop
- 133: forwarding name prefix
- 134: second base updating loop
- Tₕₑₗₗₒ: time interval for hello message
- Nₗₒₒₚ₂: number of next hop network addresses in FIB image

## Claims

1. A computer-implemented method for generating and broadcasting routing information within a wireless information centric network (10), the network (10) including a plurality of nodes (12), each node (12) having a network address (14) and a geographic location (16), wherein a plurality of data objects (18) is distributed over one or more destination nodes (20) in the network (10), each data object (18) being identifiable by a name prefix (22), wherein each node (12) in the network (10) is configured to exchange hello messages (24) with one or more neighbor nodes (26) that are reachable from the respective node (12) via a wireless connection link (28), the method comprising:
a) storing, in each node (12), a neighbor information base (80), wherein the neighbor information base (80) of a reference node contains:
- the network address (14) of each neighbor node (26) that is reachable from the reference node via a wireless connection link (28) as neighbor network address (92), and
- for each neighbor network address (92), the geographic location (16) of the corresponding neighbor node (26) as corresponding neighbor location (94);
b) storing, in each node (12), a routing information base (82), wherein the routing information base (82) of the reference node contains:
- the name prefix (22) of each data object (18) stored in such one or more destination nodes (20) that are reachable on one or more destination paths (36) starting from a next hop node (102) associated with the respective destination path (36) as routing name prefix (104),
- for each routing name prefix (104), the network address (14) of each said next hop node (102) as corresponding next hop network address (106), and
- for each routing name prefix (104) and each corresponding next hop network address (106), a path length (40) of a corresponding destination path (36) starting from the corresponding next hop node (102) as corresponding routing path length (108);
c) updating, in each node (12), the neighbor information base (80) and the routing information base (82) based on a hello message (24) received by the respective node (12), wherein the hello message (24) sent by the reference node includes:
- a network address indicator (30) corresponding to the network address (14) of the reference node,
- a location indicator (32) corresponding to the geographic location (16) of the reference node,
- one or more name prefix indicators (34), each name prefix indicator (34) corresponding to the name prefix (22) of the data object (18) stored in such one or more destination nodes (20) that are reachable on one or more destination paths (36) starting from the reference node, and
- for each name prefix indicator (34), at least one corresponding path length indicator (38) corresponding to the path length (40) of the corresponding destination path (36) starting from the reference node;
d) generating, by each node (12), the hello message (24) based on the neighbor information base (80) and the routing information base (82) of the respective node (12), and broadcasting the generated hello message (24).

2. The method according to claim 1, **characterized in that** step c) further comprises:
c1) updating the neighbor information base (80) of the respective node (12) by identifying:
- the network address indicator (30) as neighbor network address (92), and
- for the network address indicator (30) as neighbor network address (92), the corresponding location indicator (32) as corresponding neighbor location (94).

3. The method according to claim 1 or 2, **characterized in that** step c) further comprises:
c2) updating the routing information base (82) of the respective node (12) by identifying:
- each name prefix indicator (34) as routing name prefix (104),
- for each name prefix indicator (34) as routing name prefix (104), the network address indicator (30) as corresponding next hop network address (102), and
- for each name prefix indicator as routing name prefix and the network address indicator as corresponding next hop network address (102), the at least one path length indicator (38) as corresponding routing path length (108).

4. The method according to any of the preceding claims, **characterized in that** step d) further comprises:
d1) for each routing name prefix (104) and each corresponding next hop network address (106) contained in the routing information base (82) of the respective node (12), calculating the path length (40) of the corresponding destination path (36) starting from the respective node (12) by adding:
- the corresponding routing path length (108) and
- a Euclidian neighbor link distance (130) from the respective node (12) to the neighbor node (26) that has the neighbor network address (92) identical with the respective corresponding next hop network address (106), wherein said Euclidian neighbor link distance (130) is computed from the geographic location (16) of the respective node (12) and the neighbor location (94) of said neighbor node (26).

5. The method according to claim 4, **characterized in that** step d) further comprises:
d2) generating the hello message (24) by using:
- the network address (14) of the respective node (12) as network address indicator (30),
- the geographic location (16) of the respective node (12) as location indicator (32),
- each routing name prefix (104) in the routing information base (82) of the respective node (12) as name prefix indicator (34), and
- for each routing name prefix (104) as name prefix indicator (34), the calculated path length (40) of at least one of said corresponding destination paths (36) starting from the respective node (12) as path length indicator (38).

6. The method according to claim 5, **characterized in that** step d) comprises: d3) generating the hello message (24) by selecting, for each routing name prefix (104) as name prefix indicator (34), the corresponding destination path (36) starting from the respective node (12) that has the lowest calculated path length (40).

7. The method according to any of the preceding claims, **characterized in that** the neighbor information base (80) and/or the routing information base (82) are further updated based on the dynamic link exchange protocol (DLEP).

8. The method according to any of the preceding claims, **characterized in that**:
e) the neighbor information base (80) of the reference node further contains:
- for each neighbor network address, a quality parameter (86) indicative of a quality of the wireless connection link (28) from the reference node to the corresponding neighbor node (26) as corresponding neighbor link quality (96);
f) the routing information base (82) of the reference node further contains:
- for each routing name prefix (104) and each corresponding next hop network address (106), an average quality parameter (44) of the said corresponding destination path (36) starting from the corresponding next hop node (26) as corresponding average routing quality (110); and
g) the hello message sent by the reference node further includes:
- for each name prefix indicator (34), a corresponding average quality indicator (42) corresponding to the average quality parameter (44) of said corresponding destination path (36) starting from the reference node.

9. The method according to claim 8, **characterized in that** step c) further comprises:
c3) updating the routing information base (82) of the respective node (12) by identifying:
- for each name prefix indicator (34) as routing name prefix (104) and the network address indicator (30) as corresponding next hop network address (106), the corresponding average quality indicator (42) as corresponding average routing quality (110).

10. The method according to any of the preceding claims, **characterized in that** a quality requirement parameter is associated with each name prefix, wherein:
h) the routing information base (82) of the reference node further contains:
- for each routing name prefix (104), the quality requirement parameter (54) associated with the corresponding name prefix (22);
i) the hello message sent by the reference node includes:
- for each name prefix indicator (34), the quality requirement parameter associated with the corresponding name prefix (22).

11. The method according to claims 9 and 10, **characterized in that** step d) further comprises:
d4) for each routing name prefix (104) and each corresponding next hop network address (106) contained in the routing information base (82) of the respective node (12), calculating the average quality parameter (44) of the corresponding destination path (36) starting from the respective node (12) by using:
- the corresponding average routing quality (110) and
- the neighbor link quality (96) of the wireless connection link (28) from the respective node (12) to the neighbor node (26) that has the neighbor network address (92) identical with the respective corresponding next hop network address (106); and
d5) generating the hello message by selecting, for each name prefix indicator (34), the corresponding destination path (36) starting from the respective node (12) that has an average quality parameter (44) that satisfies the quality requirement parameter (54) associated with the corresponding name prefix (22), and by using said average quality parameter (44) as corresponding average quality indicator (42).

12. The method according to claim 11, further comprising:
j) storing, in each node (12), a forwarding information base image (84), wherein the forwarding information base image (84) of the respective node (12) is based on the routing information base (82) of the respective node (12) and contains:
- the routing name prefixes (104) as forwarding name prefixes (133) and
- for each forwarding name prefix (133), the network address (14) of one or more next hop nodes (102) associated with such corresponding destination path (36) starting from the reference node (12) that has an average quality parameter (44) that satisfies the quality requirement parameter (54) associated with the corresponding name prefix (22).

13. A data processing device comprising means for carrying out the method of any of the preceding claims.

14. A computer program comprising instructions which, when the program is executed by a computer, cause the computer to carry out the method of any of the claims 1 to 12.

15. A computer-readable data carrier having stored thereon the computer program of claim 14.
